# EUROPEAN PATENT APPLICATION

(11) **EP 4 763 935 A1**
(43) Date of publication of application: **24.06.2026**
(21) Application number: 25816061.3
(22) Date of filing: 19.05.2025
(51) Int. Cl.: C09J 7/30, C09J 7/22, C09J 183/04, C09J 163/00, C09J 11/06, C08L 83/04, C08L 63/00, C08L 93/04, C08L 57/02, C08G 59/50

(54) **ADHESIVE FILM AND POUCH-TYPE SECONDARY BATTERY COMPRISING SAME**

(30) Priority: 27.05.2024 KR 20240068918
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); YU, Hyung Kyun, Daejeon 34122 (KR)
(74) Representative: Plasseraud IP
(86) International application number: PCT/KR2025/006781
(87) International publication number: WO 2025/249818

(57) **Abstract**

The present invention relates to an adhesive film including an outer insulating layer; and an adhesive layer disposed on one surface of the outer insulating layer, wherein the adhesive layer includes a thermosetting resin, and the adhesive film satisfies at least one of an adhesion to a stainless steel substrate of 100 gf/25 mm or more and an adhesion to a polyester resin substrate of 200 gf/25 mm or more, wherein the adhesion is adhesion when the adhesive film is peeled at a peeling speed of 300 mm/min and a peeling angle of 180° at p140°C, after a surface opposite to a surface of the adhesive layer in contact with the outer insulating layer is pressed onto the stainless steel substrate or the polyester-based resin substrate using a 2 kg roller.

## Description

### TECHNICAL FIELD

### Cross-reference to Related Applications

This application claims priority from Korean Patent Application No. 10-2024-0068918, filed on May 27, 2024, the disclosure of which is incorporated by reference herein.

### Technical Field

The present invention relates to an adhesive film and a pouch type secondary battery including the same, and particularly, to an adhesive film with heat resistance secured in a folding process of a battery case of a pouch type secondary battery and a pouch type secondary battery including the same.

### BACKGROUND ART

Recently, the demand for lithium secondary batteries with high energy density is increasing as the spread of electric vehicles (EVs) has rapidly expanded. Accordingly, development of a pouch type battery case, which is advantageous for space utilization and enables weight reduction, is actively underway.

A pouch type battery case is prepared by forming a cup portion in a flexible pouch film through press forming, accommodating an electrode assembly in the cup portion, and then sealing a periphery of the cup portion. However, since a sealing portion, which is a periphery of the sealed cup portion, may protrude more than other portions of the case, energy density may be reduced and there may be a problem that insulation properties are deteriorated because sealing at an end of the sealing portion becomes weak or a metal barrier layer in the pouch film is exposed. To solve this problem, methods of folding the sealing portion are used.

The methods of folding the sealing portion include single side folding (SSF) in which the end of the sealing portion is folded 90° toward the cup portion, wing folding (WF) in which the end of the sealing portion is folded 180° toward the cup portion, and double side folding (DSF) in which the end of the sealing portion is folded 270° toward the cup portion. Among them, the single side folding and the double side folding were mainly used in the past, wherein the folding was fixed and the end of the sealing portion was protected by surrounding the sealing portion and the cup portion, which were closely attached by the above methods, with an adhesive film.

However, with respect to the single side folding and the double side folding, since they may cause relatively greater damage to the sealing portion than the wing folding, there have been increasing attempts to use the wing folding instead of the conventional single side folding and double side folding. However, with respect to the wing folding, unlike the single side folding and double side folding, since one surface of the sealing portion is not closely attached to the cup portion, it is not possible to fix it with an adhesive film after folding. Thus, with respect to the wing folding, a method is used in which an adhesive film is attached to the end of the sealing portion before folding, the end of the sealing portion is then folded 180°, and heat is applied to the corresponding portion to fix the folded portion.

However, with respect to the conventional single side folding and double side folding, since a process of applying heat to the adhesive film during fixing is unnecessary, the adhesive film used in the conventional single side folding and double side folding has low durability in high-temperature environments, and thus, it is difficult to use it directly in the wing folding method.

### DISCLOSURE OF THE INVENTION

### TECHNICAL PROBLEM

An aspect of the present invention aims to provide an adhesive film that does not detach due to its excellent heat resistance in high-temperature environments and a pouch type secondary battery including the same.

### TECHNICAL SOLUTION

[1] The present invention provides an adhesive film including an outer insulating layer; and an adhesive layer disposed on one surface of the outer insulating layer, wherein the adhesive layer includes a thermosetting resin, and the adhesive film satisfies at least one of an adhesion to a stainless steel substrate of 100 gf/25 mm or more and an adhesion to a polyester-based resin substrate of 200 gf/25 mm or more, wherein the adhesion is adhesion when the adhesive film is peeled at a peeling speed of 300 mm/min and a peeling angle of 180° at 140°C, after a surface opposite to a surface of the adhesive layer in contact with the outer insulating layer is pressed onto the stainless steel substrate or the polyester-based resin substrate using a 2 kg roller.
[2] The present invention provides the adhesive film of [1] above, wherein the stainless steel substrate is a SUS304 substrate.
[3] The present invention provides the adhesive film of [1] or [2] above, wherein the thermosetting resin is a silicone resin, an epoxy resin, or a combination thereof.
[4] The present invention provides the adhesive film of at least one of [1] to [3] above, wherein the adhesive layer includes a curing agent.
[5] The present invention provides the adhesive film of [4] above, wherein the thermosetting resin is a silicone resin, and the curing agent includes a silicone-hydride group (Si-H group).
[6] The present invention provides the adhesive film of [4] above, wherein the thermosetting resin is an epoxy resin, and the curing agent is an amine-based curing agent.
[7] The present invention provides the adhesive film of at least one of [1] to [6] above, wherein the adhesive layer includes a tackifier.
[8] The present invention provides the adhesive film of [7] above, wherein the tackifier includes at least one selected from the group consisting of a rosin-based resin, a terpene-based resin, a hydrocarbon-based resin, a hydrogenated hydrocarbon-based resin, a styrene-based resin, a phenol-based resin, and a xylene-based resin.
[9] The present invention provides the adhesive film of at least one of [1] to [8] above, wherein the stainless steel substrate is a SUS304 substrate.
[10] The present invention provides the adhesive film of at least one of [1] to [9] above, wherein the polyester-based resin substrate is a polyethylene terephthalate (PET) substrate.
[11] The present invention provides the adhesive film of at least one of [1] to [10] above, wherein the thermosetting resin is included in an amount of 10 wt% to 99 wt% based on a total weight of the adhesive layer.
[12] The present invention provides the adhesive film of at least one of [1] to [11] above, wherein the adhesive film has the adhesion to the stainless steel substrate and the polyester-based resin substrate of 500 gf/25 mm or less.
[13] The present invention provides the adhesive film of at least one of [1] to [12] above, wherein a storage modulus (G') at 140°C of the adhesive layer is in a range of 1×10⁴ Pa to 1×10⁶ Pa.
[14] The present invention provides the adhesive film of at least one of [1] to [13] above, wherein a loss modulus (G") at 140°C of the adhesive layer is in a range of 2×10³ Pa to 1×10⁵ Pa.
[15] The present invention provides the adhesive film of at least one of [1] to [14] above, wherein tanδ(G"/G') at 140°C of the adhesive layer is in a range of 0.01 to 0.45.
[16] The present invention provides the adhesive film of at least one of [1] to [15] above, wherein the adhesive film has a thickness of 30 µm to 150 µm.
[17] The present invention provides a pouch type secondary battery including: an electrode assembly including a positive electrode, a negative electrode, and a separator; a pouch type case including an accommodation portion accommodating the electrode assembly, and a terrace portion and a sealing portion which are formed along a periphery of the accommodation portion; electrode tabs protruding from each of the positive electrode and the negative electrode of the electrode assembly; electrode leads connected to the electrode tabs and protruding outward via the terrace portion; and the adhesive film of any one of [1] to [16] above disposed to surround a cross-section exposed at an end of the sealing portion.

### ADVANTAGEOUS EFFECTS

An adhesive film according to the present invention may improve heat resistance of the adhesive film by including a thermosetting resin in an adhesive layer and ensuring that adhesion measured at a high temperature (140°C) satisfies a specific range. Accordingly, even if the adhesive film located on a sealing portion of a battery case is pressed at high temperature in a preparation process of a lithium secondary battery, the adhesive film may not be detached from an outer surface of the battery case. Particularly, when the sealing portion is folded in a wing folding manner, in a case in which the adhesive film according to the present invention is used, the folded portion may be effectively fixed because the adhesive film does not detach even when pressed at high temperatures, and it is advantageous in securing insulation properties by effectively protecting an end of the sealing portion. Also, it is possible to prevent a problem of leakage of components of the adhesive layer of the adhesive film and contamination of a subsequent battery by the components of the adhesive layer during a high-temperature pressing process of the adhesive film, and to improve processability and appearance defects of the battery.

### BRIEF DESCRIPTION OF THE DRAWINGS

FIG. 1 is a cross-sectional view illustrating a laminated state of an adhesive film according to an embodiment of the present invention.
FIG. 2 is an exploded assembly view of a pouch type secondary battery before sealing.
FIG. 3 is a cross-sectional view of a sealed pouch type secondary battery.
FIG. 4 is a cross-sectional view of a pouch type secondary battery in which a sealing portion is folded.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

A "storage modulus (G')" in the present invention means a magnitude of elastic energy stored in a material under oscillation. The storage modulus (G') was measured at a frequency of 1 Hz and 140°C under conditions of a strain of 5% and a frequency range of 0.1 Hz to 100 Hz using a rotational rheometer (product name: DHR-20 by TA Instruments) in an oscillation-frequency sweep mode.

A "loss modulus (G")" in the present invention means a magnitude of elastic energy lost in a material under oscillation. The loss modulus (G") was measured at a frequency of 1 Hz and 140°C under conditions of a strain of 5% and a frequency range of 0.1 Hz to 100 Hz using a rotational rheometer (product name: DHR-20 by TA Instruments) in an oscillation-frequency sweep mode.

"tanδ(G"/G')" in the present invention means a ratio of the loss modulus to the storage modulus, and, after measuring the storage modulus and the loss modulus by the above methods, it may be calculated by the equation G"/G'.

### Adhesive Film

An adhesive film according to the present invention includes an outer insulating layer; and an adhesive layer disposed on one surface of the outer insulating layer. The adhesive layer includes a thermosetting resin.

The adhesive film satisfies at least one of an adhesion to a stainless steel substrate of 100 gf/25 mm or more and an adhesion to a polyester-based resin substrate of 200 gf/25 mm or more, and may preferably have an adhesion to a stainless steel substrate of 100 gf/25 mm or more and an adhesion to a polyester-based resin substrate of 200 gf/25 mm or more. In a case in which the above range is satisfied, the adhesive film does not detach even if a sealing portion to which the adhesive film is attached is pressed at a high temperature during a folding process of a battery case in a preparation process of a lithium secondary battery, and a problem of components of the adhesive layer melting and leaking outside the adhesive film may be prevented.

Herein, the adhesion is adhesion when the adhesive film is peeled at a peeling speed of 300 mm/min and a peeling angle of 180° at 140°C, after a surface opposite to a surface of the adhesive layer in contact with the outer insulating layer is pressed onto the stainless steel substrate or the polyester-based resin substrate using a 2 kg roller.

A pouch type battery case is prepared by forming a cup portion in a flexible pouch film through press forming, accommodating an electrode assembly in the cup portion, and then sealing a periphery of the cup portion. However, since a sealing portion, which is a periphery of the sealed cup portion, may protrude more than other portions of the case, energy density may be reduced and there may be a problem that insulation properties are deteriorated because sealing at an end of the sealing portion becomes weak or a metal barrier layer in the pouch film is exposed. To solve this problem, methods of folding the sealing portion are used.

Conventionally, single side folding, in which the end of the sealing portion is folded 90° toward the cup portion, and double side folding, in which the end of the sealing portion is folded 270° toward the cup portion, were mainly used as methods of folding the sealing portion, but since there was a problem that they caused more damage to the sealing portion, there have recently been increasing attempts to use wing folding in which the end of the sealing portion is folded 180° toward the cup portion.

However, with respect to the conventional single side folding and double side folding, since one surface of the sealing portion is closely attached to the cup portion during folding, the folded portion may be fixed and the end of the sealing portion may be protected by attaching an adhesive film to surround a closely attached portion, but, with respect to the wing folding, since the sealing portion is not closely attached to the cup portion during folding, it is not possible to fix the folded portion with an adhesive film after the folding. Thus, with respect to the wing folding, a method is used in which an adhesive film is attached to the end of the sealing portion before folding, the end of the sealing portion is then folded 180°, and heat is applied to the corresponding portion to fix the folded portion.

However, with respect to the conventional single side folding and double side folding, since a process of applying heat to the adhesive film during fixing is unnecessary, the adhesive film used in the conventional single side folding and double side folding has low durability in high-temperature environments, and thus, it is difficult to use it directly in the wing folding method. Specifically, in a case in which an adhesive film, which had been used in the conventional single side folding and double side folding, was used in the wing folding, problems occurred, such as the adhesive film being detached in a high-temperature pressing process or components of the adhesive layer melting and leaking outside the adhesive film.

Thus, as a result of a significant amount of research conducted to develop an adhesive film with improved durability in high-temperature environments, the inventors of the present invention have found that in a case in which adhesion of an adhesive layer at a high temperature (e.g., 140°C) is controlled within a specific range, a problem of detachment of the adhesive film during a high-temperature pressing process after folding may not only be prevented, but a problem of melting of components of the adhesive layer may also be solved, thereby leading to the completion of the present invention.

The adhesion may be adjusted by types and contents of the thermosetting resin, a tackifier, and a curing agent, surface treatment and surface roughness of the adhesive layer, and thickness and components of the combined outer insulating layer. For example, in a case in which silicone is used as the thermosetting resin, adhesion may be appropriately adjusted by hydrosilylation by using PDMS (polydimethylsiloxane) having a vinyl terminal group as the silicone, or by using a curing agent having a silicone-hydride group (Si-H group) together. Also, in a case in which an epoxy resin is used as the thermosetting resin, adhesion may be appropriately adjusted by including an -OH group in the epoxy resin or using an amine-based curing agent together.

Specifically, the adhesive film may have an adhesion to a stainless steel substrate of 100 gf/25 mm or more, 102 gf/25 mm or more, 104 gf/25 mm or more, 106 gf/25 mm or more, 108 gf/25 mm or more, or 110 gf/25 mm or more, and may have an adhesion to a stainless steel substrate of 500 gf/25 mm or less, 450 gf/25 mm or less, 400 gf/25 mm or less, 350 gf/25 mm or less, 300 gf/25 mm or less, 250 gf/25 mm or less, 200 gf/25 mm or less, or 160 gf/25 mm or less, wherein the above numerical ranges may be combined without limitation. For example, the adhesive film may have an adhesion to a stainless steel substrate of 100 gf/25 mm or more, 100 gf/25 mm to 500 gf/25 mm, 104 gf/25 mm to 300 gf/25 mm, or 110 gf/25 mm to 160 gf/25 mm. After the surface opposite to the surface of the adhesive layer in contact with the outer insulating layer is pressed onto the stainless steel substrate using a 2 kg roller, the adhesion to the stainless steel substrate is adhesion when the adhesive film is peeled at a peeling speed of 300 mm/min and a peeling angle of 180° at 140°C. In a case in which the adhesion of the adhesive film to the stainless steel substrate is lower than the above range, since the adhesive layer components may melt and flow out when pressed at a high temperature during wing folding and the adhesive film may detach, fixation of the folded portion may not be possible. Thus, in a case in which the adhesion of the adhesive film to the stainless steel substrate satisfies the above range, since the components of the adhesive film do not melt even if the adhesive film is pressed at a high temperature (e.g., 140°C or higher) during wing folding, processability and appearance defects of the battery may be improved, and since the adhesive film does not detach from the sealing portion to which it is attached, insulation properties may be maintained by protecting the end of the sealing portion while effectively fixing the folded portion.

The adhesive film may have an adhesion to a polyester-based resin substrate of 200 gf/25 mm or more, 202 gf/25 mm or more, 204 gf/25 mm or more, 206 gf/25 mm or more, 208 gf/25 mm or more, or 210 gf/25 mm or more, and may have an adhesion to a polyester-based resin substrate of 500 gf/25 mm or less, 450 gf/25 mm or less, 400 gf/25 mm or less, 350 gf/25 mm or less, 300 gf/25 mm or less, or 270 gf/25 mm or less. For example, the adhesive film may have an adhesion to a polyester-based resin substrate of 200 gf/25 mm or more, 200 gf/25 mm to 500 gf/25 mm, 204 gf/25 mm to 350 gf/25 mm, or 210 gf/25 mm to 270 gf/25 mm. After the surface opposite to the surface of the adhesive layer in contact with the outer insulating layer is pressed onto the polyester-based resin substrate using a 2 kg roller, the adhesion to the polyester-based resin substrate is adhesion when the adhesive film is peeled at a peeling speed of 300 mm/min and a peeling angle of 180° at 140°C. In a case in which the adhesion of the adhesive film to the polyester-based resin substrate is lower than the above range, since the adhesive layer components may melt and flow out when pressed at a high temperature during wing folding and the adhesive film may detach, the fixation of the folded portion may not be possible. Thus, in a case in which the adhesion of the adhesive film to the polyester-based resin substrate satisfies the above range, since the components of the adhesive film do not melt even if the adhesive film is pressed at a high temperature (e.g., 140°C or higher) during wing folding, the processability and appearance defects of the battery may be improved, and since the adhesive film does not detach from the sealing portion to which it is attached, the insulation properties may be maintained by protecting the end of the sealing portion while effectively fixing the folded portion.

The stainless steel substrate may be a SUS304 substrate.

The polyester-based resin substrate may be a polyethylene terephthalate (PET) substrate.

A storage modulus (G') at 140°C of the adhesive layer may be in a range of 1×10⁴ Pa to 1×10⁶ Pa, 1.5×10⁴ Pa to 5×10⁵ Pa, 2×10⁴ Pa to 2×10⁵ Pa, or 3.5×10⁴ Pa to 7×10⁴ Pa. In a case in which the above range is satisfied, since cohesion of the adhesive layer is sufficient, the adhesion may be excellent.

A loss modulus (G") at 140°C of the adhesive layer may be in a range of 2×10³ Pa to 1×10⁵ Pa, 2.5×10³ Pa to 5×10⁴ Pa, 4×10³ Pa to 3×10⁴ Pa, or 8×10³ Pa to 2×10⁴ Pa. In a case in which the above range is satisfied, the adhesive layer may have excellent adhesion to an adherend.

tanδ(G"/G') at 140°C of the adhesive layer may be in a range of 0.01 to 0.45, 0.05 to 0.40, 0.1 to 0.3, or 0.2 to 0.3. In a case in which the above range is satisfied, since the adhesion of the adhesive layer is excellent, a problem of detachment occurring during a high-temperature process may be solved.

The adhesive film may have a thickness of 20 µm to 150 µm, 30 µm to 120 µm, 35 µm to 100 µm, 40 µm to 80 µm, or 50 µm to 70 µm. In a case in which the above range is satisfied, the adhesive film may have sufficient adhesion, durability, heat resistance, and insulation properties while a space occupied by the adhesive film in the lithium secondary battery is minimized.

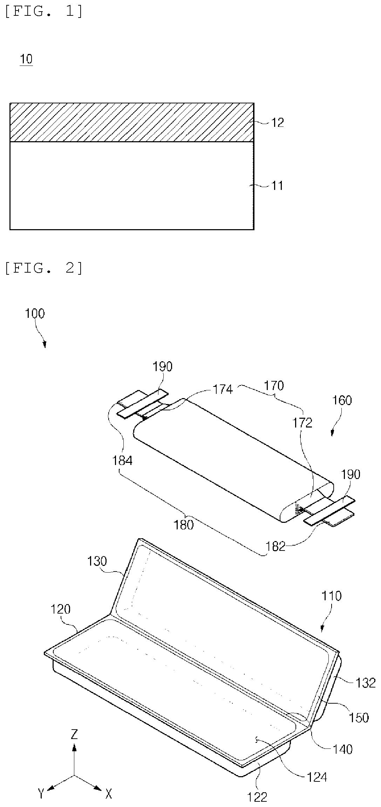

FIG. 1 is a cross-sectional view illustrating a laminated state of an adhesive film 10 according to an embodiment of the present invention.

Referring to FIG. 1, the adhesive film 10 according to the embodiment of the present invention includes an outer insulating layer 11 and an adhesive layer 12 disposed on one surface of the outer insulating layer 11.

A form of the adhesive film 10 may vary without limitation depending on the intended use. For example, the adhesive film 10 used to fix a shape of the electrode assembly may be in the form of a rectangular flat plate, but it is not limited thereto and may be used in various forms such as circular, triangular, or irregular flat plates.

### (1) Outer Insulating Layer

The outer insulating layer according to the present invention may play a role in providing mechanical stiffness required to achieve the adhesion of the adhesive film 10, may be prepared from a material having insulation properties to insulate the adhesive film 10 from the outside, and may play a role in protecting the adhesive layer from friction and collision with the outside. In this case, the outer insulating layer 11 is a layer in the form of a film or a sheet, wherein it may have a shape, such as a circular, triangular, or irregular shape, in addition to a rectangular shape.

The outer insulating layer 11 may be used without particular limitation as long as it may play a role in providing mechanical stiffness to the adhesive film 10 and protecting the adhesive layer. For example, the outer insulating layer 11 may include at least one selected from the group consisting of polyethylene terephthalate (PET), polyethylene naphthalate (PEN), polyvinyl chloride (PVC), polyimide (PI), cast polypropylene (CPP), high density polyethylene (HDPE), and low density polyethylene (LDPE).

Preferably, the outer insulating layer 11 may include at least one selected from the group consisting of polyethylene terephthalate and polyimide, and may more preferably include polyimide. In this case, in a case in which it is combined with the adhesive layer according to the present invention, the adhesion to the stainless steel substrate and the adhesion to the polyester-based resin substrate may be further improved to improve heat resistance of the adhesive film.

A thickness of the outer insulating layer 11 may be in a range of 10 µm to 60 µm, 15 µm to 50 µm, 20 µm to 45 µm, or 20 µm to 30 µm. In a case in which the thickness of the outer insulating layer 11 satisfies the above range, the adhesion of the adhesive film 10 may be improved, and since tensile strength of the outer insulating layer 11 is sufficiently secured, the tape does not break easily during a roll process of attaching the adhesive film 10 to the secondary battery and an attachment process may be easy.

### (2) Adhesive Layer

The adhesive layer 12 according to the present invention may play a role in attaching the adhesive film 10 to the adherend, and may specifically play a role in attaching the adhesive film 10 to the sealing portion of a battery case included in a lithium secondary battery by contacting an outer surface of the sealing portion.

The adhesive layer 12 includes a thermosetting resin.

The thermosetting resin means a resin that has a property of curing upon heating, and the thermosetting resin may play a role in preventing detachment of the adhesive film during high-temperature pressing by enhancing the heat resistance of the adhesive film 10 when pressed while heat is applied at a high temperature in a folding process of the sealing portion after sealing the battery case. Specifically, during the preparation of the lithium secondary battery, in order to prevent the adhesive film from detaching in a process of attaching the adhesive film to a portion of the end of the sealing portion where an electrode lead is not located, folding the sealing portion, and then pressing the sealing portion to which the adhesive film is attached at a high temperature, it is important to maintain heat resistance at high temperature at a certain level or higher. Accordingly, since the adhesive film according to the present invention may enhance the heat resistance of the adhesive layer by including the thermosetting resin in the adhesive layer, a certain level or higher of the adhesion of the adhesive layer may be achieved even at high temperatures, and thus, the detachment of the adhesive film during the high-temperature pressing process may be prevented.

The thermosetting resin may be a silicone resin, an epoxy resin, or a combination thereof. In this case, since structural stability is excellent even if the thermosetting resin is heated at a high temperature for a long time, the adhesive layer may have sufficient heat resistance even if pressed at a high temperature (for example, 140°C), and thus, a problem of detachment of the adhesive film 10 during a wing folding process may be prevented, and a problem of leakage of the components of the adhesive layer may be prevented. Specifically, in a case in which the thermosetting resin is a silicone resin, since the silicone resin has high heat resistance and electrical insulation properties, the adhesion may be sufficiently maintained even at high temperatures. Also, in a case in which the thermosetting resin is an epoxy resin, since the resin has excellent durability and impact resistance and may have high strength because polymer crosslinking occurs when exposed to heat, it has excellent stability even at high temperatures and may sufficiently maintain the adhesion even at high temperatures.

The silicone resin refers to a resin having a skeleton including bonds that are formed by alternatingly bonding silicon having an organic group with oxygen. The silicone resin may include at least one selected from the group consisting of polydimethylsiloxane (PDMS), polydiphenylsiloxane, and polyfluorosiloxane, and may preferably include polydimethylsiloxane. In this case, since the adhesion to the polyester-based resin substrate and the adhesion to the stainless steel substrate may be further improved, the heat resistance of the adhesive film may be increased.

Also, the silicone resin may include a vinyl terminal group. In this case, since the adhesion of the adhesive layer at high temperatures may be adjusted to a desired range, the problem of the detachment of the adhesive film during the pressing process after folding may be prevented.

The epoxy resin may refer to a resin containing two or more epoxy bonds in its molecule. For example, the epoxy resin may include at least one selected from the group consisting of a cresol novolac epoxy resin, a bisphenol F-type epoxy resin, a bisphenol F-type novolac epoxy resin, a bisphenol A-type epoxy resin, a bisphenol A-type novolac epoxy resin, a phenol novolac epoxy resin, a tetrafunctional epoxy resin, a biphenyl-type epoxy resin, a biphenyl-type novolac epoxy resin, a triphenol methane-type epoxy resin, an alkyl-modified triphenol methane epoxy resin, a naphthalene-type epoxy resin, a dicyclopentadiene-type epoxy resin, a dicyclopentadienemodified phenol-type epoxy resin, a glycidyl ester-type epoxy resin, a glycidyl amine-type epoxy resin, and an aliphatic cyclic epoxy resin. In this case, since the adhesion to the polyester-based resin substrate and the adhesion to the stainless steel substrate may be further improved, the heat resistance of the adhesive film may be increased.

Also, the epoxy resin may include a hydroxy group (OH group). In this case, since the adhesion of the adhesive layer at high temperatures may be adjusted to the desired range, a problem of deterioration of the insulation properties and the problem of the detachment of the adhesive film during the pressing process after folding may be prevented.

The thermosetting resin may have a weight-average molecular weight of 10,000 g/mol to 1,000,000 g/mol, 30,000 g/mol to 700,000 g/mol, or 40,000 g/mol to 600,000 g/mol. In a case in which the above range is satisfied, excellent durability of the adhesive layer may be achieved.

The thermosetting resin may be included in an amount of 10 wt% to 99 wt% based on a total weight of the adhesive layer 12. Specifically, the thermosetting resin may be included in an amount of 10 wt% or more, 20 wt% or more, 30 wt% or more, 40 wt% or more, 50 wt% or more, 60 wt% or more, 70 wt% or more, or 80 wt% or more, and may be included in an amount of 99 wt% or less, 95 wt% or less, 90 wt% or less, 85 wt% or less, 80 wt% or less, 75 wt% or less, 70 wt% or less, 65 wt% or less, or 60 wt% or less based on the total weight of the adhesive layer 12. The above numerical ranges may be combined without limitation. For example, the thermosetting resin may be included in an amount of 10 wt% to 99 wt%, 50 wt% to 90 wt%, or 60 wt% to 90 wt% based on the total weight of the adhesive layer 12. In a case in which the above range is satisfied, excellent durability and heat resistance of the adhesive layer may be secured.

The adhesive layer may include a curing agent. The curing agent may chemically crosslink the thermosetting resin to improve the cohesion of the adhesive layer and improve the adhesion of the adhesive layer at high temperatures.

In the case that the thermosetting resin is the silicone resin, the curing agent may be a curing agent containing a silicone-hydride group (Si-H group), and may specifically contain a dimethylsiloxane-methylhydrogen siloxane copolymer. In this case, the adhesion may be appropriately adjusted by hydrosilylation of the silicone resin and the curing agent.

Also, in the case that the epoxy resin is used as the thermosetting resin, the curing agent may be an amine-based curing agent, and may specifically be an imidazole curing agent. In this case, the cohesion of the adhesive layer may be strengthened by sufficiently performing a curing reaction with the epoxy resin, and the adhesion may be appropriately adjusted.

The curing agent may be included in an amount of 0.1 wt% to 30 wt%, 0.5 wt% to 20 wt%, or 1 wt% to 10 wt% based on the total weight of the adhesive layer. In a case in which the above range is satisfied, since tack properties and cohesiveness are appropriately provided to the adhesive layer, the adhesion may be improved to the desired range.

The thermosetting resin and the curing agent may be included in a weight ratio of 50:50 to 99.3:0.7, 70:30 to 99:1, 90:10 to 98.7:1.3, or 95:5 to 98.5:1.5. In a case in which the above range is satisfied, since the thermosetting resin and the curing agent are sufficiently crosslinked, excellent adhesion may be achieved at high temperatures.

The thermosetting resin and the curing agent may be included in a weight ratio of 0.1:1 to 5:1, 0.5:1 to 2:1, or 0.8:1 to 1.5:1 based on crosslinkable functional groups. In a case in which the above range is satisfied, both the thermosetting resin and the curing agent may react to increase crosslinking density, and accordingly, the adhesion may be excellent.

The adhesive layer may include a tackifier. The tackifier may play a role in increasing adhesiveness of the surface of the adhesive layer 12 which adheres to the adherend.

In a case in which the adhesive layer includes only the thermosetting resin, since initial tack of the adhesive film may be insufficient, sufficient initial tack may be secured when the adhesive layer additionally includes the tackifier, and thus, initial adhesion performance may be excellent and accordingly, the detachment of the adhesive film may be further prevented not only at high temperatures but also at room temperature.

The tackifier may include at least one selected from the group consisting of a rosin-based resin, a terpene-based resin, a hydrocarbon-based resin, a hydrogenated hydrocarbon-based resin, a styrene-based resin, a phenol-based resin, and a xylene-based resin, and may preferably include at least one selected from the group consisting of a hydrogenated hydrocarbon-based resin and a rosin-based resin. For example, in the case that the thermosetting resin is the silicone resin, the tackifier may include the hydrogenated hydrocarbon-based resin, and in the case that the thermosetting resin is the epoxy resin, the tackifier may include the rosin-based resin. In this case, the adhesion of the adhesive layer may be sufficiently strengthened so that the adhesive film 10 may strongly adhere to an outer surface of the battery case.

Specifically, the rosin-based resin may be a concept encompassing both rosins and rosin derivative resins. For example, the rosins include unmodified rosin (raw rosin) such as gum rosin, tall oil rosin, and wood rosin; modified rosin such as hydrogenated rosin, disproportionated rosin, and polymerized rosin in which the unmodified rosin is modified by hydrogenation, disproportionation, or polymerization; or combinations thereof. The rosin derivative resins are derivatives of the above rosins, wherein they include a derivative of the unmodified rosin, a derivative of the modified rosin, or a combination thereof. The rosin derivative resins may include rosin esters such as unmodified rosin esters which are esters of unmodified rosin and alcohols, or modified rosin esters which are esters of modified rosin and alcohols; unsaturated fatty acid-modified rosins in which rosins are modified with unsaturated fatty acids; unsaturated fatty acid-modified rosin esters in which rosin esters are modified with unsaturated fatty acids; rosin alcohols in which carboxyl groups of rosins or the various rosin derivatives (including the rosin esters, the unsaturated fatty acid-modified rosins, and the unsaturated fatty acid-modified rosin esters) have been reduced; metal salts of rosins or the various rosin derivatives; or combinations thereof.

The terpene-based resin may include at least one selected from the group consisting of polymers of terpenes (e.g., monoterpenes), such as α-pinene, β-pinene, d-limonene, l-limonene, and dipentene, an aromatic-modified terpene resin, a styrene modified terpene resin, a hydrogenated terpene resin, and a terpene phenol resin. The polymers of the terpenes may be a homopolymer of one type of terpenes or a copolymer of two or more types of terpenes. The terpene phenol resin means a polymer including a terpene residue and a phenol residue, wherein it may include a copolymer of terpenes and a phenol compound (terpene-phenol copolymer resin); a homopolymer or copolymer of terpenes modified with phenol (phenol-modified terpene resin); or a combination thereof.

The hydrocarbon-based resin may include at least one selected from the group consisting of an aliphatic hydrocarbon resin, an aromatic hydrocarbon resin, an aliphatic cyclic hydrocarbon resin, an aliphatic petroleum resin, an aromatic petroleum resin (such as a styrene-olefin copolymer), an aliphatic·alicyclic petroleum resin, a coumarone resin, and a coumarone-indene resin. For example, the aliphatic petroleum resin may be a C₅ type petroleum resin, and the aromatic petroleum resin may be a C₉ type petroleum resin.

The hydrogenated hydrocarbon-based resin refers to a resin having a structure in which the hydrocarbon-based resin is hydrogenated.

The styrene-based resin may include at least one selected from the group consisting of poly-α-methylstyrene, α-methylstyrene/styrene copolymer, styrenic monomer/aliphatic monomer copolymer, styrenic monomer/α-methylstyrene/aliphatic monomer copolymer, styrenic monomer copolymer, and styrenic monomer/aromatic monomer copolymer.

The phenol-based resin may be at least one selected from the group consisting of a terpene phenol resin, a hydrogenated terpene phenol resin, an alkylphenol resin, and a rosin phenol resin. The terpene phenol resin is the same as described above, and the hydrogenated terpene phenol resin means a resin having a structure in which the above-described terpene phenol resin is hydrogenated. The rosin phenol resin means a phenol-modified product of rosins or rosin derivative resins such as rosin esters, unsaturated fatty acid-modified rosins, and unsaturated fatty acid-modified rosin esters, and for example, the rosin phenol resin may be obtained by a method in which phenol is added as an acid catalyst to the rosins or the rosin derivative resins to perform thermal polymerization.

The xylene-based resin may include at least one selected from the group consisting of a xylene resin, an alkyl phenol-based xylene resin, a novolac phenol resin, a resoltype phenol-based xylene resin, a polyol-modified xylene resin, and an ethylene oxide-modified xylene resin.

The tackifier may be included in an amount of 5 wt% or more, 10 wt% or more, 15 wt% or more, 20 wt% or more, 25 wt% or more, 30 wt% or more, 35 wt% or more, 40 wt% or more, or 45 wt% or more, and may be included in an amount of 50 wt% or less, 45 wt% or less, 40 wt% or less, 35 wt% or less, 30 wt% or less, 25 wt% or less, 20 wt% or less, 15 wt% or less, or 10 wt% or less based on the total weight of the adhesive layer 12. The above numerical ranges may be combined without limitation. For example, the tackifier may be included in an amount of 5 wt% to 50 wt%, 5 wt% to 30 wt%, 5 wt% to 20 wt%, or 5 wt% to 15 wt% based on the total weight of the adhesive layer 12. In a case in which the above range is satisfied, since the adhesive layer may have excellent initial adhesion performance, the adhesion of the adhesive layer may be secured above a certain level and excellent adhesion may be sufficiently maintained in various temperature ranges from high temperature to room temperature, and thus, the detachment of the adhesive film may be prevented.

The thermosetting resin and the tackifier may be included in the adhesive layer 12 in a weight ratio of 1:99 to 99:1, 30:70 to 99:1, 50:50 to 95:5, 60:40 to 95:5, or 70:30 to 90:10. In a case in which the above weight ratio is satisfied, the adhesion and heat resistance may be appropriately adjusted to ensure excellent adhesion in various temperature ranges from high temperature to room temperature.

The adhesive layer 12 may have a thickness of 10 µm to 100 µm, 12 µm to 80 µm, 20 µm to 50 µm, or 30 µm to 50 µm. In a case in which the above range is satisfied, since the adhesion to the polyester-based resin substrate and the adhesion to the stainless steel substrate may be further improved while the adhesive layer has sufficient strength, the heat resistance of the adhesive film may be increased.

### Pouch Type Secondary Battery

A pouch type secondary battery according to an embodiment of the present invention includes an electrode assembly including a positive electrode, a negative electrode, and a separator; a pouch type case including an accommodation portion accommodating the electrode assembly, and a terrace portion and a sealing portion which are formed along a periphery of the accommodation portion; electrode tabs protruding from each of the positive electrode and the negative electrode of the electrode assembly; electrode leads connected to the electrode tabs and protruding outward via the terrace portion; and the adhesive film of claim 1 disposed to surround a cross-section exposed at an end of the sealing portion.

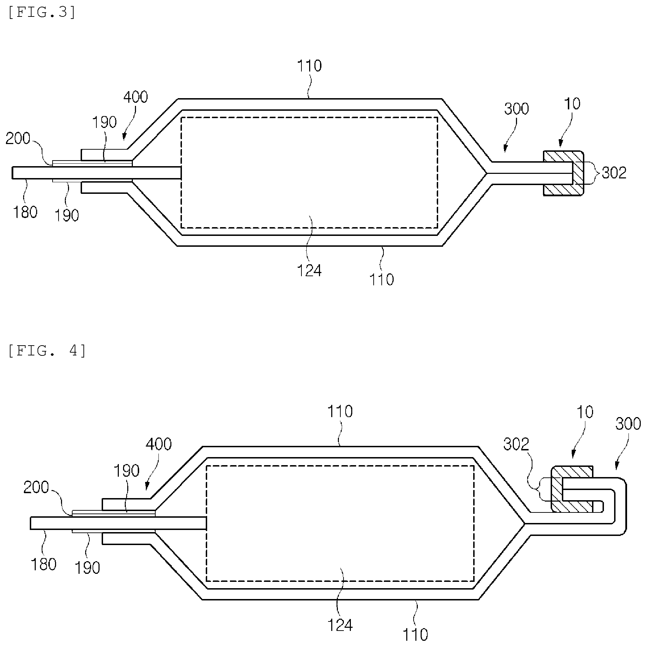

FIG. 2 is an exploded assembly view of a pouch type secondary battery 100 according to the present invention, and FIG. 3 is a cross-sectional view of the sealed pouch type secondary battery 100.

Hereinafter, each configuration of the pouch type secondary battery according to the present invention will be described in more detail with reference to FIGS. 2 and 3.

### (1) Electrode Assembly

The electrode assembly includes a positive electrode, a negative electrode, and a separator.

According to an embodiment of the present invention, an electrode assembly 160 may be inserted into a pouch type case 110 and may be sealed by the pouch type case 110 after injection of an electrolyte.

The electrode assembly 160 may be formed by sequentially stacking a positive electrode, a separator, and a negative electrode. Specifically, the electrode assembly 160 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 160 may be prepared in a predetermined shape by stacking the positive electrode and the negative electrode on both sides of the separator. Types of the electrode assembly 160 may include a stacked type, a jelly-roll-type, and a stack and folding type, but are not limited thereto.

### (2) Pouch Type Case

The pouch type case includes an accommodation portion accommodating the electrode assembly, and a terrace portion and a sealing portion which are formed along a periphery of the accommodation portion.

According to an embodiment of the present invention, the pouch type case 110 may accommodate the electrode assembly 160 inside. The pouch type case 110 may be prepared by forming a pouch film laminate. In this case, the pouch film laminate may include a base material layer, a gas barrier layer, and a sealant layer. In the pouch film laminate, the base material layer, the gas barrier layer, and the sealant layer may be sequentially laminated.

The base material layer is formed as an outermost layer of the pouch film laminate to protect a secondary battery from friction and collision with the outside. The base material layer is formed of a polymer such that it may electrically insulate the electrode assembly from the outside.

The base material layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the base material layer may be formed of polyethylene terephthalate (PET), Nylon, or a combination thereof, which has wear resistance and heat resistance.

The base material layer may have a single-layer structure formed of any one material. Alternatively, the base material layer may have a composite layer structure which is formed by layering two or more materials, respectively.

The base material layer may have a thickness of 5 µm to 50 µm, particularly 7 µm to 40 µm, and more particularly 25 µm to 38 µm. In a case in which the thickness of the base material layer satisfies the above range, since external insulation is excellent and an entire pouch is not thick, energy density to volume of the secondary battery may be excellent.

The gas barrier layer is laminated between the base material layer and the sealant layer to secure mechanical strength of the pouch, block incoming and outgoing of gas or moisture from the outside of the secondary battery, and prevent leakage of an electrolyte from the inside of the pouch type case.

The gas barrier layer may be formed of metal, and may specifically be formed of an aluminum alloy thin film. In a case in which the gas barrier layer is formed by using the aluminum alloy thin film, the gas barrier layer is lightweighted while securing more than a predetermined level of mechanical strength, may compensate for electrochemical properties by the electrode assembly and the electrolyte, and may secure a heat dissipation property. A metallic element other than aluminum (Al), for example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

The gas barrier layer may have a thickness of 40 µm to 100 µm, particularly 50 µm to 90 µm, and more particularly 55 µm to 85 µm. In a case in which the thickness of the gas barrier layer satisfies the above range, gas barrier performance and formability when forming a cup portion are excellent.

The sealant layer is for completely sealing the inside of the pouch type case by being thermally bonded to each other at a sealing portion when the pouch type case accommodating the electrode assembly inside is sealed. For this purpose, the sealant layer may be formed of a material having excellent thermal adhesive strength.

The sealant layer may be formed of a material having insulation properties, corrosion resistance, and sealing properties. Specifically, since the sealant layer is in direct contact with the electrode assembly and/or the electrolyte inside the pouch type case, it may be formed of a material having insulation properties and corrosion resistance. Also, since the sealant layer completely seals the inside of the pouch type case to block material movement between the inside/the outside, it may be formed of a material having high sealing properties (e.g., excellent thermal adhesive strength). To ensure such insulation properties, corrosion resistance, and sealing properties, the sealant layer may be formed of a polymer material.

The sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably be formed of a polyolefinbased resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylenebutylene-ethylene terpolymer.

The sealant layer may have a thickness of 30 µm to 130 µm, particularly 50 µm to 120 µm, and more particularly 70 µm to 100 µm. In a case in which the thickness of the sealant layer satisfies the above range, there is an effect of securing formability of the pouch film laminate while securing sealing strength of the sealing portion.

The pouch film laminate may be drawn and stretched by a punch or the like to prepare the pouch type case 110. As a result, the pouch type case 110 may include a cup portion 122 and an accommodation portion 124. The accommodation portion 124 is a place to accommodate the electrode assembly, wherein it may mean an accommodation space which is formed in a pocket shape inside the cup portion 122 as the cup portion 122 is formed.

According to an embodiment of the present invention, the pouch type case 110 may include a first case 120 and a second case 130 as illustrated in FIG. 1. The first case 120 includes the accommodation portion 124 capable of accommodating the electrode assembly 160, and the second case 130 may cover the accommodation portion 124 from the top so that the electrode assembly 160 is not separated to the outside of the battery case 110. The first case 120 and the second case 130 may be prepared by connecting one sides thereof to each other as illustrated in FIG. 1, but the present invention is not limited thereto and the first case 120 and the second case 130 may be prepared in various ways, for example, the first case 120 and the second case 130 are separated from each other and prepared separately.

According to another embodiment of the present invention, in a case in which the cup portion is formed on the pouch film laminate, the two symmetrical cup portions 122 and 132 may be drawn adjacent to each other on one pouch film laminate. In this case, as illustrated in FIG. 1, the cup portions 122 and 132 may be formed in the first case 120 and the second case 130, respectively. After the electrode assembly 160 is accommodated in the accommodation portion 124 provided in the cup portion 122 of the first case 120, a bridge portion 140 formed between the two cup portions 122 and 132 may be folded so that the two cup portions 122 and 132 face each other. In this case, the cup portion 132 of the second case 130 may accommodate the electrode assembly 160 from above. Thus, since the two cup portions 122 and 132 accommodate the one electrode assembly 160, the electrode assembly 160 having a thickness greater than that when the cup portion 122 is one may be accommodated. Also, since one edge of the secondary battery 100 is formed by folding the pouch type case 110, the number of edges to be sealed may be reduced when a sealing process is performed later. Accordingly, a process speed of the pouch type secondary battery 100 may be improved, and the number of sealing processes may be reduced.

The pouch type case 110 may be sealed in a state in which it accommodates the electrode assembly 160 so that a portion of an electrode lead 180 to be described later, that is, a terminal portion, is exposed. Specifically, when the electrode lead 180 is connected to an electrode tab 170 of the electrode assembly 160 and a lead film 190 is formed in the portion of the electrode lead 180, the electrode assembly 160 is accommodated in the accommodation portion 124 provided in the cup portion 122 of the first case 120, and the second case 130 may cover the accommodation portion 124 from the top. Subsequently, an electrolyte is injected in the accommodation portion 124 and a portion of a peripheral portion 150 formed on edges along peripheries of the first case 120 and the second case 130 may be sealed to form a sealing portion 300 and a terrace portion 400.

Accordingly, the pouch type case includes the accommodation portion accommodating the electrode assembly, and the terrace portion and sealing portion which are formed along the periphery of the accommodation portion.

The sealing portion 300 refers to a region of the sealed peripheral portion 150 from which the electrode lead does not protrude.

The terrace portion 400 refers to a region of the sealed peripheral portion 150 from which the electrode lead protrudes, and the electrode lead protrudes to the outside via the terrace portion.

The sealing portion 300 and the terrace portion 400 may act to seal the accommodation portion 124. Specifically, the sealing portion 300 and the terrace portion 400 may seal the accommodation portion 124 while being formed on the peripheral portion 150 which is formed on the edge along the periphery of the accommodation portion 124.

Temperature at which the sealing portion 300 and the terrace portion 400 are sealed may be in a range of 180°C to 250°C, 200°C to 250°C, or 210°C to 240°C. In a case in which the sealing temperature satisfies the above numerical range, the pouch type case 110 may secure sufficient sealing strength by thermal bonding.

The sealing portion 300 may be folded such that an end 302 of the sealing portion faces the accommodation portion 124, and specifically, 30% to 70%, 35% to 65%, or 40% to 60% of a width of the sealing portion 300 may be folded. In this case, the width of the sealing portion 300 may mean a length from a boundary between the accommodation portion 124 and the sealing portion 300 to the end 302 of the sealing portion. In this case, energy density of the lithium secondary battery may be improved and a vent pressure may be improved.

The sealing portion 300 may be folded 180° (with an error range of ±10%) such that the end 302 of the sealing portion faces the accommodation portion 124. In this case, since the end 302 of the sealing portion is protected with the adhesive film such that the metal barrier layer may not be exposed, there is an advantage in that insulation properties may be ensured more effectively and the sealing portion may be less damaged.

### (3) Electrode Tab

An electrode tab 170 protrudes from each of the positive electrode and the negative electrode of the electrode assembly 160.

Specifically, the electrode tab 170 is connected to each of the positive electrode and the negative electrode of the electrode assembly 160 and protrudes from the electrode assembly 160 to the outside so that it may be a path through which electrons may move between the inside and the outside of the electrode assembly 160. The electrode current collector included in the electrode assembly 160 may be composed of a portion to which the electrode active material is applied and an end portion to which the electrode active material is not applied, that is, an uncoated portion. The electrode tab 170 may be formed by cutting the uncoated portion or may be formed by connecting a separate conductive member to the uncoated portion by ultrasonic welding or the like. As illustrated in FIG. 1, the electrode tabs 170 may protrude in different directions of the electrode assembly 160, respectively, but are not limited thereto and may be formed to protrude in various directions, for example, the electrode tabs 170 protrude side by side from one side of the electrode assembly 160 in the same direction.

### (4) Electrode Lead

An electrode lead is connected to the electrode tab, protrudes to the outside the pouch type case, and may specifically protrude to the outside via the terrace portion of the pouch type case.

Specifically, the electrode lead 180 may supply electricity to the outside of the pouch type secondary battery 100. The electrode lead 180 may be connected to the electrode tab 170 of the electrode assembly 160 by spot welding or the like.

The electrode lead 180 is connected to the electrode assembly 160 and may protrude to the outside of the pouch type case 110 via the terrace portion 400. Specifically, one end of the electrode lead 180 is connected to the electrode assembly 160, especially the electrode tab 170, and the other end of the electrode lead 180 may protrude to the outside of the pouch type case 110 via the terrace portion 400.

The electrode lead 180 may include a positive electrode lead 182, which has one end connected to a positive electrode tab 172 and extends in a protruding direction of the positive electrode tab 172, and a negative electrode lead 184 which has one end connected to a negative electrode tab 174 and extends in a protruding direction of the negative electrode tab 174. The other ends of both of the positive electrode lead 182 and the negative electrode lead 184 may protrude to the outside of the battery case 110. Accordingly, the electricity generated inside the electrode assembly 160 may be supplied to the outside. Also, since the positive electrode tab 172 and the negative electrode tab 174 are formed to respectively protrude in various directions, the positive electrode lead 182 and the negative electrode lead 184 may also respectively extend in various directions. Materials of the positive electrode lead 182 and the negative electrode lead 184 may be different from each other. That is, the positive electrode lead 182 may be formed of an aluminum (Al) material that is the same as the positive electrode collector, and the negative electrode lead 184 may be formed of a copper (Cu) material or nickel (Ni)-coated copper material that is the same as the negative electrode collector. Since a portion of the electrode lead 180 protruding to the outside of the pouch type case 110 becomes a terminal portion, it may be electrically connected to an external terminal.

A film layer 200 including at least one selected from the group consisting of chromium (Cr), nickel (Ni), aluminum oxide (Al₂O₃), a zirconium (Zr)-based anhydrous oxide salt, and a titanium (Ti)-based anhydrous oxide salt may be formed on one surface of the electrode lead 180 which is in direct contact with the lead film 190 and/or a gas discharge portion (not shown). In this case, corrosion resistance against the electrolyte solution and adhesiveness to the lead film 190 and/or the gas discharge portion may be secured.

The electrode lead 180 may include the lead film 190.

The lead film 190 prevents flow of the electricity generated from the electrode assembly 160 to the pouch type case 110 through the electrode lead 180, and may maintain sealing of the pouch type case 110. For this purpose, the lead film 190 may be formed of an insulator having nonconductivity which does not conduct electricity well. In general, as the lead film 190, an insulating tape or film, which is easy to be attached to the electrode lead 180 and is relatively thin, is widely used, but the present invention is not limited thereto, and any member capable of insulating the electrode lead 180 may be used.

The lead film 190 may be disposed to surround an outer circumferential surface of the electrode lead 180. Specifically, at least a portion of the electrode lead 180 may be surrounded by the lead film 190. In this case, the lead film 190 may be disposed between the electrode lead 180 and the pouch type case 110. The lead film 190 may be limitedly located at the sealing portion 300 to which the first case 120 and the second case 130 of the pouch type case 110 are thermally fused, and may adhere the electrode lead 180 to the pouch type case 110.

### (5) Adhesive Film

Since a structure and components of the adhesive film 10 are the same as described above, a detailed description thereof is omitted.

The adhesive film 10 according to the present invention is disposed to surround a cross-section exposed at the end 302 of the sealing portion 300.

Specifically, the adhesive film 10 may be positioned to cover both surfaces of the sealing portion 300 while being positioned to surround the cross-section exposed at the end 302 of the sealing portion 300 where the electrode lead 180 does not protrude, or the adhesive film 10 may be positioned to cover both surfaces of the sealing portion 300 with the same area while being positioned to surround the cross-section exposed at the end 302 of the sealing portion 300 where the electrode lead 180 does not protrude. In this case, the gas barrier layer included in the pouch film laminate may be prevented from being exposed at the end of the sealing portion, and accordingly, an effect capable of preventing a short circuit of the battery and maintaining insulation properties of the pouch type case may be obtained.

In this case, in the case that the adhesive film 10 is positioned to cover both surfaces of the sealing portion 300, the adhesive film 10 may cover 20% to 80%, 30% to 70%, or 40% to 60% of a surface area of the sealing portion 300. Also, the adhesive film 10 may cover 50% or more, 60% or more, 70% or more, or 80% or more of a periphery of the sealing portion 300.

FIG. 4 is a cross-sectional view of the pouch type secondary battery 100 in which the sealing portion 300 is folded.

Referring to FIG. 4, in a state in which the adhesive film 10 is positioned to surround the cross-section exposed at the end 302 of the sealing portion 300 where the electrode lead 180 does not protrude, the sealing portion 300 may be folded such that the end 302 of the sealing portion faces the accommodation portion 124, and specifically, the sealing portion 300 may be folded 180° such that the end 302 of the sealing portion faces the accommodation portion 124. When the sealing portion 300 is folded, the adhesive film 10 may be positioned on the folded sealing portion.

After folding the sealing portion 300, the folded sealing portion 300 may be pressed at high temperature. Accordingly, the energy density of the lithium secondary battery may be improved by allowing the sealing portion to be fixed in a folded state. Also, the adhesive film disposed on the outer surface of the sealing portion is also pressed at high temperature during the pressing, wherein when the adhesive film used in the conventional single side folding or double side folding was pressed at high temperature, there was a problem in that the adhesive film was detached or the components of the adhesive layer melted and leaked. In contrast, the lithium secondary battery according to the present invention may solve the problem of the detachment of the adhesive film and the leakage of the components of the adhesive layer during the wing folding process, which essentially requires the high-temperature pressing process, by disposing the adhesive film having a certain level or higher of adhesion at high temperatures on the cross-section exposed at the end of the sealing portion.

Specifically, the sealing portion 300 in a folded state may be pressed by a heating press. In this case, the sealing portion 300 in a folded state may be pressed by the heating press at 0.01 MPa to 1 MPa, 0.05 MPa to 0.7 MPa, or 0.1 MPa to 0.5 MPa. In this case, since the detachment of the adhesive film disposed at the end of the sealing portion by excessive heating of the folded sealing portion may be prevented while improving the energy density of the battery by fixing the sealing portion in a folded state, exposition of the end of the folded sealing portion may be prevented, and accordingly, an effect of maintaining the insulation properties and safety of the battery case may be obtained because exposition of the gas barrier layer of the pouch film laminate to the outside may be prevented.

### (6) Electrolyte

The pouch type secondary battery 100 according to the present invention may further include an electrolyte (not shown) that is injected into the pouch type case 110.

As the electrolyte, various electrolytes usable in a lithium secondary battery, for example, an organic liquid electrolyte, an inorganic liquid electrolyte, a solid polymer electrolyte, a gel-type polymer electrolyte, a solid inorganic electrolyte, and a molten-type inorganic electrolyte may be used, and types thereof are not particularly limited.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂, LiN(CF₃SO₂)₂, LiCl, LiI, or LiB (C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte in addition to the above electrolyte components. For example, as the additive, a haloalkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be used alone or in a mixture thereof, but the present invention is not limited thereto. The additive may be included in an amount of 0.1 wt% to 10 wt%, preferably, 0.1 wt% to 5 wt% based on a total weight of the electrolyte.

### Examples and Comparative Examples

### Example 1

A composition for forming an adhesive layer was prepared by mixing polydimethylsiloxane (PDMS) having a vinyl terminal, as a thermosetting resin, and a dimethylsiloxanemethylhydrogensiloxane copolymer, as a curing agent, in a weight ratio of 98:2.

A polyethylene terephthalate (PET) film was prepared as an outer insulating layer, and an adhesive film was prepared by coating one surface of the polyethylene terephthalate film with the above-prepared composition for forming an adhesive layer and then drying at a temperature of 140°C for 3 minutes to form an adhesive layer. In the prepared adhesive film, the outer insulating layer had a thickness of 25 µm and the adhesive layer had a thickness of 40 µm.

### Example 2

An adhesive film was prepared in the same manner as in Example 1 except that, in the prepared adhesive film, a thickness of an adhesive layer was 20 µm.

### Example 3

An adhesive film was prepared in the same manner as in Example 1 except that a polyimide (PI) film with a thickness of 25 µm was used as the outer insulating layer.

### Example 4

An adhesive film was prepared in the same manner as in Example 1 except that an epoxy resin having an OH group was used instead of the polydimethylsiloxane as the thermosetting resin and an imidazole curing agent (C11Z-A) was used as the curing agent.

### Comparative Example 1

A composition for forming an adhesive layer was prepared by mixing an acrylic copolymer including acrylic acid (AA), butyl acrylate (BA), and ethylhexyl acrylate (EHA), as an acrylic resin, and a rosin ester-based tackifier in a weight ratio of 90:10.

A polyethylene terephthalate (PET) film was prepared as an outer insulating layer, and an adhesive film was prepared by coating one surface of the polyethylene terephthalate film with the above-prepared composition for forming an adhesive layer and then drying at a temperature of 140°C for 3 minutes to form an adhesive layer. In the prepared adhesive film, the outer insulating layer had a thickness of 25 µm and the adhesive layer had a thickness of 40 µm.

### Comparative Example 2

An adhesive film was prepared in the same manner as in Comparative Example 1 except that, in the prepared adhesive film, an outer insulating layer had a thickness of 40 µm and an adhesive layer had a thickness of 7 µm.

### Comparative Example 3

An adhesive film was prepared in the same manner as in Comparative Example 1 except that a polyimide (PI) film with a thickness of 25 µm was used as the outer insulating layer.

### Comparative Example 4

An adhesive film was prepared in the same manner as in Example 1 except that the thermosetting resin and the curing agent were mixed in a weight ratio of 99.5:0.5.

### Experimental Example 1: Adhesion Measurement Test

### 1) Measurement of Adhesion to Stainless Steel Substrate

Each of the adhesive films prepared in Examples 1 to 4 and Comparative Examples 1 to 4 was cut to a size of 25 mm × 150 mm. A surface opposite to the adhesive layer of the cut adhesive film was pressed onto a SUS304 substrate, as a stainless steel substrate, using a 2 kg roller. Thereafter, the adhesive film was peeled at a peeling speed of 300 mm/min and a peeling angle of 180° at 140°C, and adhesion in this case was measured using ASTM D 3330. Measurement results are presented in Table 1 below.

### 2) Measurement of Adhesion to Polyester-based resin substrate

Each of the adhesive films prepared in Examples 1 to 4 and Comparative Examples 1 to 4 was cut to a size of 25 mm × 150 mm. A surface opposite to the adhesive layer of the cut adhesive film was pressed onto a polyethylene terephthalate (PET) substrate, as a polyester-based resin substrate, using a 2 kg roller. Thereafter, the adhesive film was peeled at a peeling speed of 300 mm/min and a peeling angle of 180° at 140°C, and adhesion in this case was measured using ASTM D 3330. Measurement results are presented in Table 1 below.

**[Table 1]**

| | SUS394 substrate adhesion [gf/25mm] | PET substrate adhesion [gf/25mm] |
|---|---|---|
| Example 1 | 140 | 240 |
| Example 2 | 110 | 210 |
| Example 3 | 160 | 270 |
| Example 4 | 400 | 300 |
| Comparative Example 1 | 24 | 49 |
| Comparative Example 2 | 40 | 75 |
| Comparative Example 3 | 50 | 90 |
| Comparative Example 4 | 20 | 30 |

### Experimental Example 2: Measurement of Storage Modulus and Loss Modulus

The adhesive layers included in the adhesive films prepared by Examples 1 to 4 and Comparative Examples 1 to 4 were laminated to a thickness of 800 µm to 1000 µm on a parallel plate having a diameter of 8 mm, and then cut by punching them with a punch having a diameter of 8 mm. Thereafter, storage modulus (G') and loss modulus (G") of the adhesive films were measured using each DHR-20 rotational rheometer (manufacturer: TA Instruments). All measurements were performed in an oscillation-frequency sweep mode at a frequency of 1 Hz and 140°C under conditions of an axial force of 100 gf, a strain of 5%, and a frequency range of 0.1 Hz to 100 Hz.

Measurement results are presented in Table 2 below.

**[Table 2]**

| | Storage modulus (G') [Pa] | Loss modulus (G") [Pa] | tanδ(G"/G') |
|---|---|---|---|
| Example 1 | 35,000 | 8,000 | 0.23 |
| Example 2 | 35,000 | 8,000 | 0.23 |
| Example 3 | 35,000 | 8,000 | 0.23 |
| Example 4 | 70,000 | 20,000 | 0.29 |
| Comparative Example 1 | 2,000 | 1,000 | 0.5 |
| Comparative Example 2 | 2,000 | 1,000 | 0.5 |
| Comparative Example 3 | 2,000 | 1,000 | 0.5 |
| Comparative Example 4 | 1,500 | 800 | 0.53 |

### Experimental Example 3: Adhesive Film Detachment Test

Lithium secondary batteries were prepared by using the adhesive films prepared in Examples 1 to 4 and Comparative Examples 1 to 4. Specifically, after an electrode assembly was accommodated in an accommodation portion of a pouch type battery case, an upper portion of the accommodation portion was covered, and a peripheral portion formed along a periphery of the accommodation portion was sealed. Thereafter, after each adhesive film was positioned such that an end of a sealing portion, where an electrode lead did not protrude, and the adhesive layer of each of the adhesive films prepared in Examples 1 to 4 and Comparative Examples 1 to 4 were in contact with each other and was adhered in a form of surrounding the end of the sealing portion, the sealing portion was folded 180° such that the end of the sealing portion faced the accommodation portion to prepare each lithium secondary battery.

In the above-prepared lithium secondary batteries, the sealing portions in a state in which the adhesive films prepared in Examples 1 to 4 and Comparative Examples 1 to 4 were adhered and folded were pressed at a temperature of 140°C. In this case, whether each of the adhesive films prepared in Examples 1 to 4 and Comparative Examples 1 to 4 was detached from an outer surface of the pouch type battery case of each lithium secondary battery or not was visually confirmed, and the results thereof are presented in Table 3 below.
- O: The adhesive film was detached from the outer surface of the pouch type battery case.
- X: The adhesive film was not detached from the outer surface of the pouch type battery case.

**[Table 3]**

| | Whether the adhesive film was detached or not |
|---|---|
| Example 1 | X |
| Example 2 | X |
| Example 3 | X |
| Example 4 | X |
| Comparative Example 1 | O |
| Comparative Example 2 | O |
| Comparative Example 3 | O |
| Comparative Example 4 | O |

Referring to Table 3, it may be confirmed that the adhesive films prepared in Examples 1 to 4 did not detach when pressed at 140°C, but the adhesive films prepared in Comparative Examples 1 to 4 detached when pressed at 140°C.

### (Description of the Symbols)

10: Adhesive Film
11: Outer Insulating Layer
12: Adhesive Layer
100: Pouch Type Secondary Battery
110: Pouch Type Case
120: First Case
122: Cup Portion
124: Accommodation Portion
130: Second Case
132: Cup Portion
140: Bridge Portion
150: Peripheral Portion
160: Electrode Assembly
170: Electrode Tab
172: Positive Electrode Tab
174: Negative Electrode Tab
180: Electrode Lead
182: Positive Electrode Lead
184: Negative Electrode Lead
190: Lead Film
200: Film Layer
300: Sealing Portion
302: End of the Sealing Portion
400: Terrace Portion.

## Claims

1. An adhesive film comprising:
an outer insulating layer; and
an adhesive layer disposed on one surface of the outer insulating layer,
wherein the adhesive layer comprises a thermosetting resin, and
the adhesive film satisfies at least one of an adhesion to a stainless steel substrate of 100 gf/25 mm or more and an adhesion to a polyester-based resin substrate of 200 gf/25 mm or more,
wherein the adhesion is adhesion when the adhesive film is peeled at a peeling speed of 300 mm/min and a peeling angle of 180° at p140°C, after a surface opposite to a surface of the adhesive layer in contact with the outer insulating layer is pressed onto the stainless steel substrate or the polyester-based resin substrate using a 2 kg roller.

2. The adhesive film of claim 1, wherein the outer insulating layer comprises at least one selected from the group consisting of polyethylene terephthalate, polyethylene naphthalate, polyvinyl chloride, polyimide, cast polypropylene, high density polyethylene, and low density polyethylene.

3. The adhesive film of claim 1, wherein the thermosetting resin is a silicone resin, an epoxy resin, or a combination thereof.

4. The adhesive film of claim 1, wherein the adhesive layer comprises a curing agent.

5. The adhesive film of claim 4, wherein the thermosetting resin is a silicone resin, and
the curing agent comprises a silicone-hydride group (Si-H group).

6. The adhesive film of claim 4, wherein the thermosetting resin is an epoxy resin, and
the curing agent is an amine-based curing agent.

7. The adhesive film of claim 1, wherein the adhesive layer comprises a tackifier.

8. The adhesive film of claim 7, wherein the tackifier comprises at least one selected from the group consisting of a rosin-based resin, a terpene-based resin, a hydrocarbon-based resin, a hydrogenated hydrocarbon-based resin, a styrene-based resin, a phenol-based resin, and a xylene-based resin.

9. The adhesive film of claim 1, wherein the stainless steel substrate is a SUS304 substrate.

10. The adhesive film of claim 1, wherein the polyester-based resin substrate is a polyethylene terephthalate (PET) substrate.

11. The adhesive film of claim 1, wherein the thermosetting resin is included in an amount of 10 wt% to 99 wt% based on a total weight of the adhesive layer.

12. The adhesive film of claim 1, wherein the adhesive film has the adhesion to the stainless steel substrate and the polyester-based resin substrate of 500 gf/25 mm or less.

13. The adhesive film of claim 1, wherein a storage modulus (G') at 140°C of the adhesive layer is in a range of 1×10⁴Pa to 1×10⁶Pa.

14. The adhesive film of claim 1, wherein a loss modulus (G") at 140°C of the adhesive layer is in a range of 2×10³Pa to 1×10⁵Pa.

15. The adhesive film of claim 1, wherein tanδ(G"/G') at 140°C of the adhesive layer is in a range of 0.01 to 0.45.

16. The adhesive film of claim 1, wherein the adhesive film has a thickness of 30 µm to 150 µm.

17. A pouch type secondary battery comprising:
an electrode assembly including a positive electrode, a negative electrode, and a separator;
a pouch type case including an accommodation portion accommodating the electrode assembly, and a terrace portion and a sealing portion which are formed along a periphery of the accommodation portion;
electrode tabs protruding from each of the positive electrode and the negative electrode of the electrode assembly;
electrode leads connected to the electrode tabs and protruding outward via the terrace portion; and
the adhesive film of claim 1 disposed to surround a cross-section exposed at an end of the sealing portion.
